# EUROPÄISCHE PATENTSCHRIFT

(11) **EP 2 246 607 B1**
(45) Veröffentlichungstag und Bekanntmachung des Hinweises auf die Patenterteilung: **08.05.2013**
(21) Anmeldenummer: 10008635.4
(22) Anmeldetag: 22.03.2007
(51) Int. Cl.: F16L 37/092

(54) **Fitting für Wasserrohre**
Fitting for water pipes
Raccord pour tuyaux d'eau

(43) Veröffentlichungstag der Anmeldung: 03.11.2010
(62) Teilanmeldung aus: 07405099.8
(73) Patentinhaber: Geberit International AG, 8645 Jona (CH)
(72) Erfinder: Wili, Hansruedi, 8645 Jona (CH); Wyss, Roger, 8633 Wolfhausen (CH); Huber, René, 8645 Jona (CH)
(74) Vertreter: Szynka, Dirk

(56) Entgegenhaltungen:
- EP-A- 1 722 146
- EP-A1- 1 296 089
- WO-A-03/044416
- JP-A- 2002 357 295

## Beschreibung

Die Erfindung betrifft einen Fitting für Wasserrohre, insbesondere Verbundrohre, mit wenigstens einem Stutzen, auf den ein anzuschließendes Rohrende aufschiebbar ist, mit einem Außenteil, welches den Stutzen umgibt und mit einer Außenseite des Stutzens einen Zwischenraum bildet, In dem das anzuschließende Rohrende einschiebbar ist, mit einem in diesem Zwischenraum angeordneten Anschlag und mit einem Kontrollmittel, das eine korrekte Position des Rohrendes visuell anzeigt.

Fittinge dieser Art sind als Steckfittinge oder Pressfittinge seit langem bekannt. Sie ermöglichen es, Wasserrohre und insbesondere Verbundrohre miteinander zu verbinden oder an eine Armatur anzuschließen. Damit die Verbindung dicht ist, ist es wesentlich, dass das Rohrende vollständig in den Fitting eingesetzt wird. Bei nicht vollständig eingesetztem Rohrende kann die Dichtigkeit nicht gewährleistet werden.

Damit beim Montieren der Verbindung das voltständige Einsetzen des Rohrendes in den Fitting kontrolliert werden kann, sind im Stand der Technik bereits Kontrollmittel bekannt. Beispielsweise zeigt die EP 1 154 187 A einen Pressfitting für Kunststoff-Verbundrohre, der ein Kontrollmittel aufweist. Dieses ist ein Isolierring aus Kunststoff, der in der Art einer gewölbten Federscheibe in Richtung zum Rohrende zweimal konvex gewölbt ist. In der Mitte jeder konvexen Wölbung ist eine achsparallele Zunge angeformt, die in eine Ausnehmung einer Außenumfangsrippe eingreift. Bei vollständig eingeschobenem Rohr ragen diese Zungen jeweils aus der entsprechenden Ausnehmung hervor und sind visuell sichtbar als auch fühlbar. Die Sichtbarkeit solcher vorragender Zungen ist jedoch vielfach nicht hinreichend. Dies insbesondere dann, wenn der Fitting an einer schlecht einsichtbaren Stelle angeordnet ist, wie dies bei Sanitärleitungen häufig der Fall ist.

Die EP 1 296 089 A1 zeigt einen Fitting, der ein Indikatorelement mit einem Kontrollabschnitt aufweist. Der Kontrollabschnitt ist radial beweglich In einer nach außen führenden Queröffnung des Aufnahmeteils angeordnet und überragt vor dem Einführen des Rohrendes die Außenkontur des Aufnahmeteils.

Die EP 1 722 146 A zeigt ein Fitting für Wasserrohre mit wenigstens einem Stutzen, auf den ein anzuschließendes Rohrende aufschiebbar ist, mit einem Außenteil, welches den Stutzen umgibt und mit einer Außenseite des Stutzens einen Zwischenraum bildet, in den das anzuschließende Rohrende einschiebbar ist, mit einem in diesem Zwischenraum angeordneten Anschlag und mit einem Kontrollmittel, das eine korrekte Position des Rohrendes im Fitting visuell anzeigt, wobei das Außenteil in einer Mantelfläche ein Sichtfenster aufweist, das Kontrollmittel im genannten Zwischenraum mit dem Rohrende in Längsrichtung des Fittings von einer ersten Position in eine zweite Position verschiebbar ist, wobei das Kontrollmittel in der ersten Positionen durch das Sichtfenster sichtbar ist, und beim Verschieben des Kontrollmittels in die zweite Position im genannten Sichtfenster eine Farb- bzw. Kontraständerung stattfindet.

Der Erfindung liegt die Aufgabe zugrunde, einen Fitting der genannten Art zu schaffen, der eine noch sicherere visuelle Kontrolle ermöglicht.

Diese Aufgabe wird durch einer Fitting nach Anspruch 1 gelöst.

Beim erfindungsgemäßen Fitting erfolgt die visuelle Kontrolle an wenigstens einem Fenster, in dem das voltständige Einschieben des Rohrendes durch eine Färb- bzw. Kontraständerung ersichtlich ist. Das Fenster ist an einer Mantelfläche des Außenteils angeordnet. Das Fenster ist damit In aller Regel gut sichtbar. Die Sichtbarkeit kann durch einen hohen Farbkontrast zwischen dem Kontrollmittel und der genannten Mantelfläche in einfacher Weise erhöht werden. Dadurch ergibt sich eine sehr hohe Stecksicherheit. Die Erfindung eignet sich insbesondere für Fittinge, bei denen der Außenteil nicht verpresst wird. Das Rohr wird bei diesen Fittingen selbsttätig mit einem Rückhaltemittel fixiert. Zum Montieren der Verbindung muss somit lediglich das Rohrende in den Fitting eingeschoben werden. Dies kann ohne Werkzeug erfolgen. Notwendig ist dann lediglich noch die genannte visuelle Kontrolle.

Ist das Kontrollmittel in der ersten Position sichtbar, so ist die korrekte Verbindung daran erkennbar, dass das Kontrollmittel nicht mehr sichtbar ist. Im anderen Fall ist das Kontrollmittel sichtbar. Das Kontrollmittel kann auch zwei Bereiche aufweisen, wobei in der ersten Position der eine Bereich und in der zweiten Position der andere Bereich sichtbar ist.

Erfindungsgemäß ist das Kontrollmittel in der genannten zweiten und/oder ersten Position verrastet. Bei Verrastungen der Endposition ist diese genau definiert und wird auch dann gehalten, wenn das Rohrende noch geringfügig zurückgezogen wird.

Das Kontrollmittel besitzt damit eine genau definierte Endposition. Diese wird auch dann gehalten, wenn das Rohrende noch geringfügig zurückgezogen wird.

Nach einer Weiterbildung der Erfindung ist das Kontrollmittel ringförmig oder hülsenförmig ausgebildet. Insbesondere sind dann mehrere Sichtfenster möglich, beispielsweise zwei diametral gegenüberliegende Sichtfenster.

Nach einer Weiterbildung der Erfindung ist das Kontrollmittel im Querschnitt L-förmig ausgebildet. Insbesondere ist hierbei vorgesehen, dass im Querschnitt gesehen der eine Schenkel des Kontrollmittels bei eingesetztem Rohrende an der Stirnseite des Rohrendes anliegt und der andere Schenkel an der Aussenseite des Rohrendes anliegt und dieser andere Schenkel durch das genannte Fenster wenigstens bereichsweise sichtbar ist. Das Kontrollmittel kann damit wirksam die Stirnseite des Rohrendes, insbesondere gegen Korrosion schützen. Ein solcher Korrosionsschutz ist vor allem bei Verbundrohren zweckmässig, bei denen eine mittlere Schicht aus einem Metall, beispielsweise aus Aluminium hergestellt ist. Vorzugsweise wird das Fenster durch den genannten anderen Schenkel im Wesentlichen vollständig abgedichtet.

Nach einer Weiterbildung der Erfindung ist vorgesehen, dass das Aussenteil mit einem Verriegelungsteil mit dem Stutzen verriegelt ist. Dies ermöglicht eine besonders einfache Montage. Hierbei wird das Kontrollmittel auf den Stutzen aufgesetzt und anschliessend wird das Aussenteil auf den Stutzen aufgesetzt und mit dem Verriegelungsteil mit dem Stutzen verriegelt. Die Verriegelung kann lösbar oder unlösbar sein. Geeignete Verriegelungsteile sind an sich bekannt.

Nach einer Weiterbildung der Erfindung ist vorgesehen, dass an einer Innenseite des Aussenteils ein Rückhaltemittel angeordnet ist und dass das Kontrollmittel in der genannten ersten Position in Einschieberichtung des Rohrendes nach diesem Rückhaltemittel angeordnet ist. In der genannten ersten Position befindet sich das Kontrollmittel in Einsteckrichtung vorzugsweise unmittelbar nach dem Rückhaltemittel. In dieser ersten Position ist das Kontrollmittel vorzugsweise verrastet. Beim Einschieben des Rohrendes wird diese Verrastung aufgehoben. Damit ergibt sich eine sichere erste Position des Kontrollmittels. In dieser ersten Position ist das Kontrollmittel durch das genannte Fenster nicht oder zumindest kaum sichtbar.

Nach einer Weiterbildung der Erfindung ist zwischen dem Stutzen und dem Aussenteil ein Rückhaltemittel angeordnet, das ein in den Zwischenraum eingesetztes Rohrende selbsttätig gegen ein Zurückziehen fixiert. Dieses Rückhaltemittel ist insbesondere keilförmig ausgebildet und wird nach dem Einschieben des Rohrendes radial nach aussen gespannt. Hierbei graben sich Rippen oder Zähne des Rückhaltemittels in die Aussenseite des Rohrendes ein und fixieren dadurch das Rohrende in der Endposition.

Die Erfindung betrifft zudem eine Rohrverbindung mit wenigstens einem Fitting der genannten Art. Die Rohrverbindung ist vorzugsweise eine Steckverbindung zwischen dem Fitting und wenigstens einem Verbundsrohr.

Weitere vorteilhafte Merkmale ergeben sich aus den abhängigen Patentansprüchen, der nachfolgenden Beschreibung sowie der Zeichnung.

Ein Ausfiihrungsbeispiel der Erfindung wird nachfolgend anhand der Zeichnung näher erläutert. Es zeigen:
- Figur 1: Längsschnitt durch einen erfindungsgemässen Fitting mit einem Rohrende, das an den Fitting angeschlossen werden soll,
- Figur 2: ein Schnitt gemäss Figur 1, wobei hier jedoch das Rohrende teilweise in den Fitting eingesetzt ist,
- Figur 3: ein Schnitt gemäss Figur 1, jedoch mit vollständig eingesetzten Rohrende und
- Figur 4: schematisch eine räumliche Ansicht des erfindungsgemässen Fittings mit eingesetztem Rohrende.

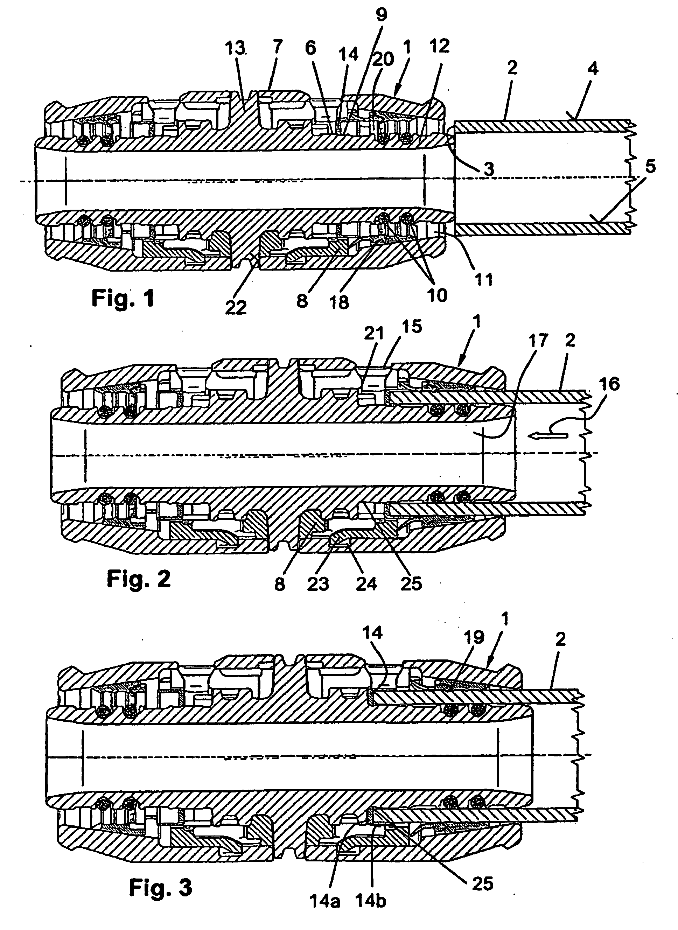

Der Fitting 1 besitzt zum Anschliessen eines Rohres 2 einen Stutzen 12, der mit einem Aussenteil 7 einen Zwischenraum 20 bildet. Dieser Zwischenraum 20 ist im Wesentlichen zylindrisch ausgebildet und besitzt eine vordere ringförmige hoffnung 11, in welche das Rohr 2 gemäss Figur 2 in Richtung des Pfeils 16 einschiebbar ist. Der Fitting 1 ist bei dem gezeigten Ausfiihrungsbeispiel ein Doppelfitting mit einem geraden Durchgang 17 und entsprechend besitzt dieser zwei gleiche Stutzen 12. Der Fitting 1 kann aber auch lediglich einen Stutzen 12 oder mehrere solche Stutzen aufweisen. Der Fitting 1 kann auch beispielsweise ein T-Stutzen sein, an demjenigen drei Rohre miteinander verbunden werden können. Der Fitting 1 kann aber auch an einer Armatur, beispielsweise an einem Wasserhahn angeordnet sein.

Das Rohr 2 ist vorzugsweise ein Verbundrohr und besitzt eine Stirnseite 3, eine Umfangsfläche 4 sowie eine Innenseite 5. Das Rohr 2 besitzt insbesondere eine hier nicht gezeigte mittlere Schicht aus Metall, beispielsweise Aluminium und eine innere sowie eine äussere Schicht, die jeweils aus einem geeigneten Kunststoff hergestellt sind. Diese Schichten sind an der Stirnseite 3 sichtbar.

Das Aussenteil 7 ist auf den Stutzen 12 aufgesetzt und liegt mit einer vorderen Fläche 22 an einem Wulst 13 an. Mit einem Verriegelungsteil 8 ist das Aussenteil 7 fest mit dem Stutzen 12 verbunden. Das Verriegelungsteil 8 befindet sich ebenfalls im Zwischenraum 20 und zwar unmittelbar vor dem Wulst 13. Die Verriegelung erfolgt hier mit Rastzungen 23, die in eine umlaufende Nut 24 an der Innenseite des Aussenteils 7 eingreift. Solche Verriegelungsmittel sind an sich bekannt. Grundsätzlich kann das Aussenteil 7 aber auch auf andere Weise fest mit dem Stutzen 12 verbunden sein. Zum Abdichten des eingesetzten Rohres 2 sind auf dem Stutzen 12 zwei im Abstand zueinander angeordnete Dichtungsringe 10 eingesetzt. Das Rohr 2 ist somit unmittelbar nach der Öffnung 11 gegenüber dem Fitting 1 abgedichtet.

In Einsteckrichtung ist im Aussenteil 7 ein Rückhaltemittel 18 gelagert, das nach innen gerichtete Rippen 19, Zähne oder Krallen besitzt. Das Rückhaltemittel 18 dient dazu, das gemäss Figur 3 in den Zwischenraum 20 eingesetzte Rohr 2 gegen eine Auszugskraft zu fixieren. Wird das Rohr 2 in den Zwischenraum 20 eingesetzt, so wird das ringförmige Rückhaltemittel 18 radial nach aussen gespannt und die Rippen 19 bzw. Krallen graben sich in die Umfangsfläche 4 ein und fixieren dadurch das Rohr 2.

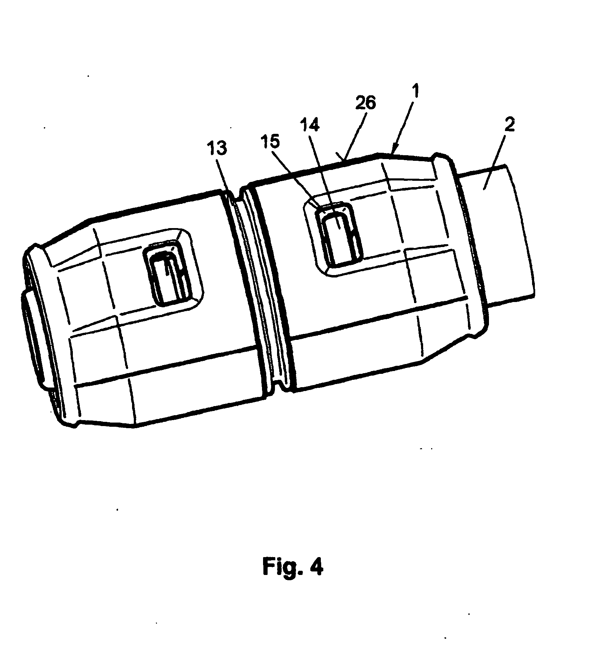

Im Zwischenraum 20 ist zudem ein Kontrollmittel 14 angeordnet, das in Einsteckrichtung nach dem Rückhaltemittel 18 und im Abstand zu einer Anschlagfläche 21 angeordnet ist. In dieser in Figur 1 gezeigten Position ist das Kontrollmittel 14 in einer Nut 9 achsial verrastet. Diese Position ist die erste Position oder Grundposition. Wieder in Einsteckrichtung gesehen nach dem Kontrollmittel 14 befindet sich im Aussenteil 7 wenigstens ein Fenster 15, das durch einen Durchbruch im Aussenteil 7 gebildet wird. Das Fenster 15 ist beispielsweise gemäss Figur 4 rechteckig und befindet sich im Abstand zum Wulst 13. Vorzugsweise sind mehrere solche Fenster 15 im Aussenteil 7 vorgesehen. Insbesondere sind zwei diametral gegenüberliegende Fenster 15 vorgesehen. Der gezeigte Doppelfitting 1 besitzt somit insbesondere vier solche Fenster 15.

Das Kontrollmittel 14 ist wie ersichtlich im Querschnitt L-förmig ausgebildet. Es besitzt im Querschnitt gesehen einen ersten Schenkel 14a und einen winklig von dem abstehenden zweiten Schenkel 14b (Fig. 3). Der Schenkel 14a liegt bei eingesetztem Rohr 2 an der Stirnseite 3 an und deckt diese somit ab. Der andere Schenkel 14b liegt hingegen unmittelbar hinter der Stirnseite 3 an der Umfangsfläche 4 an.

Wird das Rohr 2 gemäss Figur 2 in Richtung des Pfeils 16 durch die Öffnung 11 in den Zwischenraum 20 geschoben, so erreicht bei der in Figur 2 gezeigten Position die Stirnseite 3 das Kontrollmittel 14 und schiebt dieses weiter, bis es an einer Anschlagfläche 21 anliegt. Das Rohr 2 kann nun nicht weiter in den Zwischenraum 20 eingeschoben werden und hat die Endposition erreicht. Eine Rastrippe 6 wird hierbei vom Kontrollmittel 14 übersprungen.

Hat das Kontrollmittel 14 die in Figur 3 gezeigte Endposition bzw. zweite Position erreicht, so ist der Schenkel 14a in eine Nut 25 des Stutzens 12 eingerastet. In dieser zweiten Position ist das Kontrollmittel 14 somit fixiert und kann diese Position nicht mehr verlassen. Dies auch dann, wenn das Rohr 2 geringfügig zurückgezogen wird. Ein solches Zurückziehen ist bei einem Test möglich, beeinträchtigt aber die Dichtigkeit in keiner Weise. In dieser zweiten Position befindet sich das Kontrollmittel 14 in Achsialrichtung gesehen auf der Höhe des Fensters 15. Durch das Fenster 15 ist das Kontrollmittel 14 sichtbar, wie dies insbesondere die Figur 4 zeigt. Es ist nun vorgesehen, dass das Kontrollmittel 14 einen möglichst hohen Farbkontrast zu einer Aussenseite 26 des Aussenteils 7 bildet. Das Kontrollmittel 14 ist beispielsweise rot und die Aussenseite 26 dunkel, beispielsweise schwarz. Befindet sich das Kontrollmittel 14 in der in Figur 1 oder in Figur 2 gezeigten Position, so ist durch das Fenster 15 hindurch der Stutzen 12 sichtbar. Der genannte Farbkontrast ist dann nicht vorhanden oder es ist durch das Fenster 15 eine andere Farbe sichtbar. Beim Einschieben des Rohres 2 kann beispielsweise die sichtbare Fläche von schwarz oder weiss auf rot wechseln. Ein solcher Farbwechsel ist besonders auffällig und kann visuell auch in einer schlecht beleuchteten Nische erkannt werden. Befindet sich das Kontrollmittel 14 nur teilweise im Bereich des Fensters 15, so ist es ebenfalls visuell auffällig und sichtbar. Das Kontrollmittel 14 bildet somit ein Anzeigemittel, das anzeigt, dass das Rohr 2 vollständig und bis zum Anschlag in den Zwischenraum 20 in den Fitting 1 eingeschoben worden ist. Die Blickrichtung bei einer Kontrolle radial zur Längsrichtung des Fittings kann aber auch geneigt dazu sein, so dass das Vorhandensein bzw. das Nichtvorhandensein des Kontrollmittels 14 im Fenster 15 aus verschiedenen Blickrichtungen erkennbar ist.

Bei einer alternativen Ausführung ist das Kontrollmittel 14 in der ersten Position mit einem Farbkontrast sichtbar ist. In dieser ersten Position ist das Kontrollmittel 14 in der Nut 9 verrastet oder sonstwie achsial fixiert. Wird das Rohr 2 durch die Öffnung 11 eingeführt, so wird das Kontrollmittel 14 wie oben erläutert von der ersten Position in die zweite Position verschoben. In der zweiten Position ist das Kontrollmittel 14 jedoch nicht mehr sichtbar, oder es erscheint im Fenster ein weiterer Bereich des Kontrollmittels. Dieser weitere Bereich besitzt eine andere Farbe als der erste Bereich und diese andere Farbe entspricht der Farbe der Aussenseite 26 des Aussenteils 7, womit der vor dem Fügen vorhanden gewesene Farbkontrast aufgehoben ist. Vor dem Fügen ist beispielsweise im Fenster 15 ein schwarzer Bereich sichtbar. Möglich ist auch eine Umkehrung. Danach wäre vor dem Fügen durch das Fenster 15 eine Kontrastfarbe, beispielsweise Rot, sichtbar und nach dem Fügen wäre diese Kontrastfarbe nicht mehr sichtbar. Wesentlich ist somit eine Farb- bzw. Kontraständerung im Fenster beim Herstellen der Verbindung.

### Bezugszeichentiste

- 1: Fitting
- 2: Rohr
- 3: Stirnseite
- 4: Umfangsfläche
- 5: Innenseite
- 6: Rastrippe
- 7: Aussenteil
- 8: Verriegelungsteil
- 9: Nut
- 10: Dichtungsring
- 11: Öffnung
- 12: Stutzen
- 13: Wulst
- 14: Kontrollmittel
- 14a: Schenkel
- 14b: Schenkel
- 15: Fenster
- 16: Pfeil
- 17: Durchgang
- 18: Rückhaltemittel
- 19: Rippe
- 20: Zwischenraum
- 21: Anschlagfläche
- 22: Fläche
- 23: Rastzungen
- 24: Nut
- 25: Nut
- 26: Aussenseite

## Patentansprüche

1. Fitting für Wasserrohre, insbesondere Verbundrohre, mit wenigstens einem Stutzen (12), auf den ein anzuschließendes Rohrende (2) aufschiebbar ist, mit einem Außenteil (7), welches den Stutzen (12) umgibt und mit einer Außenseite des Stutzens (12) einen Zwischenraum (20) bildet, in den das anzuschlie-βende Rohrende (2) einschiebbar Ist, mit einem in diesem Zwischenraum (20) angeordneten Anschlag (21) und mit einem Kontrollmittel (14), das eine korrekte Position des Rohrendes (2) im Fitting (1) visuell anzeigt, wobei das Außenteil (7) in einer Mantelfläche (26) ein Sichtfenster (15) aufweist, das Kontrollmittel (14) im genannten Zwischenraum (20) mit dem Rohrende (2) in Längsrichtung des Fittings (1) von einer ersten Position in eine zweite Position verschiebbar ist, wobei das Kontrollmittel (14) in wenigstens einer der beiden Positionen durch das Sichtfenster (15) sichtbar ist, und beim Verschieben des Kontrollmittels (14) in die zweite Position im genannten Sichtfenster (15) eine Farb- bzw. Kontraständerung stattfindet, wobei das Kontrollmittel (14) in der genannten zweiten und/oder ersten Position verrastet ist.

2. Fitting nach Anspruch 1, **dadurch gekennzeichnet, dass** das Kontrollmittel (14) in der zweiten Position in einer Nut (25) des Stutzens (12) verrastet ist.

3. Fitting nach Anspruch 1 oder 2, **dadurch gekennzeichnet, dass** das Kontrollmittel (14) ringförmig oder hülsenförmig ausgebildet ist.

4. Fitting nach Anspruch 3, **dadurch gekennzeichnet, dass** das Kontrollmittel (14) im Querschnitt L-förmig ausgebildet ist.

5. Fitting nach Anspruch 4, **dadurch gekennzeichnet, dass** im Querschnitt gesehen der eine Schenkel (14a) des Kontrollmittels (14) bei eingesetztem Rohrende (2) an der Stirnseite (3) des Rohrendes (2) dichtend anliegt und der andere Schenkel (14b) an der Außenseite (4) des Rohrendes (2) anliegt und dieser andere Schenkel (14b) durch das genannte Fenster (15) bereichsweise sichtbar ist.

6. Fitting nach einem der Ansprüche 1 bis 5, **dadurch gekennzeichnet, dass** das Außenteil (7) mit einem Verriegelungsteil (8) mit dem Stutzen (12) verriegelt ist.

7. Fitting nach einem der Ansprüche 1 bis 6, **dadurch gekennzeichnet, dass** der genannte Stutzen (12) außenseitig wenigstens einen Dichtungsring (10) aufweist, der im Abstand zum genannten Anschlag (21) angeordnet ist.

8. Fitting nach einem der Ansprüche 1 bis 7, **dadurch gekennzeichnet, dass** er als Doppelfitting, als T-Stutzen oder Anschlussteil einer Armatur ausgebildet ist.

9. Fitting nach einem der Ansprüche 1 bis 8, **dadurch gekennzeichnet, dass** das Kontrollmittel (14) zwei Bereiche aufweist, wobei der eine Bereich in der ersten Position und der zweite Bereich in der zweiten Position im Sichtfenster (15) sichtbar ist.

10. Fitting nach Anspruch 4, auch in Verbindung mit einem der Ansprüche 5 - 9, bei dem das Kontrollmittel (14) einen ersten Schenkel (14a) und ein winklig davon abstehenden zweiten Schenkel (14b) aufweist, wobei der erste Schenkel (14a) dazu ausgelegt ist, bei eingesetztem Rohrende (2) dieses an der Stirnseite (3) abzudecken, und der zweite Schenkel (14b) vorzugsweise dazu ausgelegt ist, bei eingesetztem Rohrende (2) an einer Umfangsfläche (4) des Rohrendes (2) anzuliegen.

11. Rohrverbindung mit einem Fitting gemäß einem der Ansprüche 1 bis 10, **dadurch gekennzeichnet, dass** die Verbindung zwischen dem Fitting und dem Rohr (2) eine Steckverbindung ist und dass das Rohr ein Verbundrohr ist.

12. Rohrverbindung gemäß Anspruch 11, **dadurch gekennzeichnet, dass** sie eine Armatur mit einem Wasserleitungsrohr und insbesondere einem Verbundrohr (2) verbindet.

## Claims

1. Fitting for water pipes, in particular composite pipes, having at least one stub (12), onto which can be pushed a pipe end (2) which is to be connected, having an outer part (7) which encloses said stub (12) and, with an outer side of said stub (12), forms an interspace (20) into which can be pushed said pipe end (2) which is to be connected, having a stop (21) which is arranged in this interspace (20), and having a control means (14) which visually indicates the correct position of said pipe end (2) in said fitting (1), wherein said outer part (7) has a viewing window (15) in a lateral surface (26), and said control means (14) can be displaced in said aforementioned interspace (20) along with said pipe end (2), in the longitudinal direction of said fitting (1) from a first position into a second position, wherein said control means (14) is visible in said viewing window (15) in at least one of said positions and, upon displacement of said control means (14) into said second position in said aforementioned viewing window (15), a change in colour or contrast takes place, and wherein said control means (14) is latched in said aforementioned second and/or first position.

2. Fitting according to Claim 1, **characterized in that** said control means (14), in said second position is latched in a groove (25) of said stub (12).

3. Fitting according to Claim 1 or 2, **characterized in that** said control means (14) is of annular or sleeve-like design.

4. Fitting according to Claim 3, **characterized in that** said control means (14) is L-shaped in cross section.

5. Fitting according to Claim 4, **characterized in that**, as seen in cross section, the one leg (14a) of said control means (14), with said pipe end (2) inserted, butts with sealing action against the end side (3) of said pipe end (2) and the other leg (14b) butts against the outer side (4) of said pipe end (2), and certain regions of this other leg (14b) are visible through said aforementioned window (15).

6. Fitting according to one of Claims 1 to 5, **characterized in that** said outer part (7) is locked to said stub (12) by a locking part (8).

7. Fitting according to one of Claims 1 to 6, **characterized in that** said aforementioned stub (12) has, on its outer side, at least one sealing ring (10), which is spaced apart from said aforementioned stop (21).

8. Fitting according to one of Claims 1 to 7, **characterized in that** it is designed as a double fitting, as a T-shaped connector, or as a fixture connection part.

9. Fitting according to one of Claims 1 to 9, **characterized in that** said control means (14) has two regions, wherein the one region is visible in said viewing window (15) in said first position and the second region is visible therein in said second position.

10. Fitting according to Claim 4, also in connection with one of Claims 5 to 9, wherein said control means (14) has a first leg (14a) and a second leg (14b) projecting therefrom in an angle, wherein said first leg (14a) is adapted to cover said pipe end (2), if inserted, at an end side (3) thereof, and said second leg (14b) is preferably adapted to butt against a lateral side (4) of said pipe end (2), if inserted.

11. Pipe connection having a fitting according to one of Claims 1 to 10, **characterized in that** the connection between said fitting and the pipe (2) is a plug-in connection, and **in that** said pipe is a composite pipe.

12. Pipe connection according to Claim 11, **characterized in that** it connects a fixture to a water pipe and, in particular, to a composite pipe (2).

## Revendications

1. Raccord pour tuyaux d'eau, notamment pour tuyaux composites, comprenant au moins une tubulure (12) sur laquelle l'extrémité (2) d'un tuyau à raccorder peut être enfilée et comprenant une partie extérieure (7) qui entoure la tubulure (12) et forme, avec un côté extérieur de la tubulure (12), un interstice (20) dans lequel l'extrémité de tuyau (2) à raccorder peut être introduite, et présentant une butée (21) agencée dans cet interstice (20) ainsi qu'un moyen de contrôle (14) permettant de visualiser la bonne position de l'extrémité de tuyau (2) dans le raccord (1), cet égard la partie extérieure (7) présente, dans une surface d'enveloppe (26), une fenêtre de visualisation (15), le moyen de contrôle (14) pouvant coulisser dans ledit interstice (20) avec l'extrémité de tuyau (2) dans le sens longitudinal du raccord (1) d'une première position vers une seconde position, le moyen de contrôle (14) étant visible dans l'une au moins des deux positions par la fenêtre de visualisation (15), et, lors du coulissement du moyen de contrôle (14) dans la seconde position, un changement de couleur ou de contraste se produit dans ladite fenêtre de visualisation (15), le moyen de contrôle (14) étant encliqueté dans ladite seconde et/ou première position.

2. Raccord selon la revendication 1, **caractérisé en ce que** le moyen de contrôle (14) est encliqueté dans la seconde position dans une rainure (25) de la tubulure (12).

3. Raccord selon la revendication 1 ou 2, **caractérisé en ce que** le moyen de contrôle (14) est conçu en forme de bague ou de manchon.

4. Raccord selon la revendication 3, **caractérisé en ce que** le moyen de contrôle (14) est conçu, dans sa section transversale, en forme de L.

5. Raccord selon la revendication 4, **caractérisé en ce que**, vu en section transversale et une fois l'extrémité de tuyau (2) introduite, un pan (14a) du moyen de contrôle (14) repose de manière étanche contre le bord frontal (3) de l'extrémité de tuyau (2) et l'autre pan (14b) repose contre le bord extérieur (4) de l'extrémité de tuyau (2) et cet autre pan (14b) est visible par segments à travers ladite fenêtre (15).

6. Raccord selon l'une des revendications 1 à 5, **caractérisé en ce que** la partie extérieure (7) est verrouillée avec la tubulure (12) au moyen d'une partie de verrouillage (8).

7. Raccord selon l'une des revendications 1 à 6, **caractérisé en ce que** ladite tubulure (12) présente sur son côté extérieur au moins un joint annulaire (10) agencé à l'écart de ladite butée (21).

8. Raccord selon l'une des revendications 1 à 7, **caractérisé en ce qu'**il est conçu sous la forme d'un raccord double, d'une tubulure en T ou d'élément de connexion à un robinet.

9. Raccord selon l'une des revendications 1 à 8, **caractérisé en ce que** le moyen de contrôle (14) présente deux zones, l'une des zones étant visible dans la fenêtre de visualisation dans la première position et la seconde des zones y étant visible dans la seconde position.

10. Raccord selon la revendication 4, également conjointement avec l'une des revendications 5 à 9, dans lequel le moyen de contrôle (14) présente un premier pan (14a) et un second pan (14b) faisant saillie de manière coudée par rapport à celui-ci, le premier pan (14a) étant conçu pour que, une fois l'extrémité de tuyau (2) introduite, il vienne recouvrir son bord frontal (3), et le second pan (14b) étant conçu pour, de préférence, être situé contre une surface circonférentielle (4) de l'extrémité de tuyau (2) une fois ladite extrémité de tuyau (2) introduite.

11. Connexion pour tuyau comportant un raccord selon l'une des revendications 1 à 10, **caractérisée en ce que** la connexion entre le raccord et le tuyau (2) est une connexion par enfichage et **en ce que** le tuyau est un tuyau composite.

12. Connexion pour tuyau selon la revendication 11, **caractérisée en ce qu'**elle relie un robinet et un tuyau d'eau, notamment un tuyau composite (2).
